## Europäisches Patentamt

## European Patent Office

## Office européen des brevets

(19)

(11) Veröffentlichungsnummer: **0 061 766**
**B1**

(12) ## EUROPÄISCHE PATENTSCHRIFT

(45) Veröffentlichungstag der Patentschrift:
18.07.84

(51) Int. Cl.³: **G 11 B 15/26, G 11 B 15/18**

(21) Anmeldenummer: **82102650.7**

(22) Anmeldetag: **29.03.82**

(54) **Aufhängung für den schwenkbar gelagerten Bandantriebsmotor in einem Kassettenmagnetbandgerät.**

(30) Priorität: **31.03.81 DE 3112802**

(43) Veröffentlichungstag der Anmeldung:
**06.10.82 Patentblatt 82/40**

(45) Bekanntmachung des Hinweises auf die Patenterteilung:
**18.07.84 Patentblatt 84/29**

(84) Benannte Vertragsstaaten:
**DE GB**

(56) Entgegenhaltungen:
**CH - A - 353 547**
**DE - B - 1 237 352**
**US - A - 2 942 488**
**US - A - 3 932 892**

(73) Patentinhaber: **TANDBERG DATA A/S,**
**Kjelsasveien 161 Postboks 9 Korsvoll, N-Oslo 8 (NO)**

(72) Erfinder: **Rudi, Guttorm, Edvard Griegsv.17,**
**N-1472 Fjellhamar (NO)**

(74) Vertreter: **Mehl, Ernst, Dipl.-Ing. et al, Postfach 22 01 76,**
**D-8000 München 22 (DE)**

BUNDESDRUCKEREI BERLIN

## Beschreibung

Die Erfindung bezieht sich auf eine Aufhängung für den schwenkbar gelagerten Bandantriebsmotor in einem Kassettenmagnetbandgerät und insbes. einem solchen Kassettenmagnetbadgerät, das in Verbindung mit Datenverarbeitungssystemen eingesetzt werden soll. Für Kassettenmagnetbandgeräte dieser Art ist es besonders wichtig, daß sie auch unter extremen Bedingungen, wie z. B. unter hoher Beschleunigung, wie sie in Fahrzeugen aller Art auftreten können, immer zuverlässig arbeiten.

Für Kassettenmagnetbadgeräte dieser Art ist es bekanntgeworden, die Schwenkachse des Bandantriebsmotors so zu legen, daß diese durch den Schwerpunkt des Motors verläuft. Ferner ist es dabei bekannt, ein Federelement vorzusehen, mit dessen Hilfe das auf der Motorachse angeordnete Capstan-Rad mit einer definierten Kraft gegen das Antriebsrad in der Kassette gedrückt wird. Ist diese Andruckkraft zu gering, kommt es zum Rutschen, ist die Kraft dagegen zu groß, führt dies zu erhöhter Abnutzung der Motorachslager bzw. des Antriebsrades. Bei zu großer Andruckkraft entsteht ferner eine Deformation des Reibbelages des Antriebsrades. Es ist deshalb sehr wichtig, daß der Motor in seiner Aufhängung eine möglichst kleine, sich nicht ändernde Reibung und außerdem möglichst überhaupt kein Spiel hat.

Zur Lösung dieses Problems ist es z. B. aus der US-A-2 942 488 und der US-A-3 932 892 bekannt, den Motor mit Drehzapfen in einem Lagerbügel zu lagern. Ebenfalls bekannt ist es, den Motor mit Hilfe zweier Kugeln in einer gabelförmigen Halterung zu lagern. Um einerseits Spielfreiheit zu erreichen, andererseits aber ein Klemmen des Motors zu verhindern, müssen die Kugellagerungen sehr genau sein. Eine der beiden Kugeln muß außerdem justierbar sein. Es hat sich gezeigt, daß solche Systeme sehr schwierig zu justieren sind. Entweder hat man zu viel Spiel oder aber zuviel Reibung. Außerdem sind die Kugeln bei der Montage schwierig zu hantieren. Bei Transporterschütterungen treten außerdem starke Kräfte auf, die versuchen, die Kugeln aus ihren Lagern zu drücken.

Der vorliegenden Erfindung lag daher die Aufgabe zugrunde, eine Motoraufhängung der eingangs genannten Art zu schaffen, die eine spielfreie Lagerung des Motors und auch bei großen Transporterschütterungen eine sichere Lagerung gewährleistet, gleichzeitig aber eine einfache und sichere Justierung ermöglicht. Erfindungsgemäß wird diese Aufgabe gelöst durch die Anordnung der zwei Lagerzapfen, deren dem Motor zugewandte Enden halbkugelförmig ausgebildet sind, in zwei Innenkanten des Gerätehauptrahmens durch zwei neben den Lagerzapfen angeordnete Senkschrauben zum Festklemmen der Lagerzapfen in den Innenkanten des Gerätehauptrahmens, durch eine Lagergabel zum Aufnehmen des Motors sowie durch Öffnungen in den freien Enden der Lagergabel, durch die die Lagerzapfen ragen und gegen den Motor drücken.

Durch die Verwendung von Lagerzapfen, deren eine Enden halbkugelförmig ausgebildet sind und gegen den Motor drücken, ist an den Stellen, wo die Lagerzapfen gegen den Motor drücken, nur ein punktförmiger Kontakt vorhanden, was eine gute Justiermöglichkeit und geringe Reibungskräfte mit sich bringt. Andererseits werden von den durch die Öffnungen in den freien Enden der Lagergabel ragenden Lagerzapfen die bei Transporterschütterungen auftretenden Kräfte sicher aufgenommen. Die Anordnung der Lagerzapfen in zwei Innenkanten des Gerätehauptrahmens ermöglicht in Verbindung mit den neben ihnen angeordneten Senkschrauben ein sicheres Festklemmen der Lagerzapfen und zum anderen eine besonders einfache Justierung der Lagerzapfen in bezug auf den Motor.

Im folgenden wird die Erfindung anhand von lediglich einen Ausführungsweg darstellenden Zeichnungen näher erläutert, wobei

Fig. 1 in perspektivischer Darstellung die Anordnung der Motors in der Lagergabel sowie die Anordnung von Lagerzapfen und Senkschrauben zeigt und wobei

Fig. 2 eine Unteransicht der Anordnungen von Fig. 1 zeigt, anhand der die Anordnung und Wirkung der Lagerzapfen und der Senkschrauben erläutert wird.

Die dargestellte Anordnung besteht aus einem Motor 1, der in einer Lagergabel 6 befestigt ist, die an ihren freien Enden Öffnungen 11 und 12 aufweist. Zwei Lagerzapfen 3, 13 sind an ihren dem Motor zugewandten Enden halbkugelförmig ausgebildet, ragen mit diesen Enden durch die Öffnungen 11, 12 der Lagergabel und drücken gegen den Körper des Motors 1. Die anderen Enden der Lagerzapfen 3, 13 sind in zwei Innenkanten 9, 10 des Gerätehauptrahmens 2 angeordnet und werden dort durch den kegelförmigen Kopf der Senkschrauben 4, 5 insbesondere deren Unterseite, festgeklemmt. Die durch die Lgerzapfen 3, 13 verlaufende Schwenkachse des Motors 1 geht durch den Schwerpunkt des Motors 1. Eine zwischen dem Gerätehauptrahmen 2 und der schwenkbaren Lagergabel 6 angeordnete Feder 7 erzeugt eine definierte Vorspannung, mit der das auf der Motorwelle angeordnete Capstanrad 8 gegen das hier nicht dargestellte Antriebsrad in der Magnetbandkassette gedrückt.

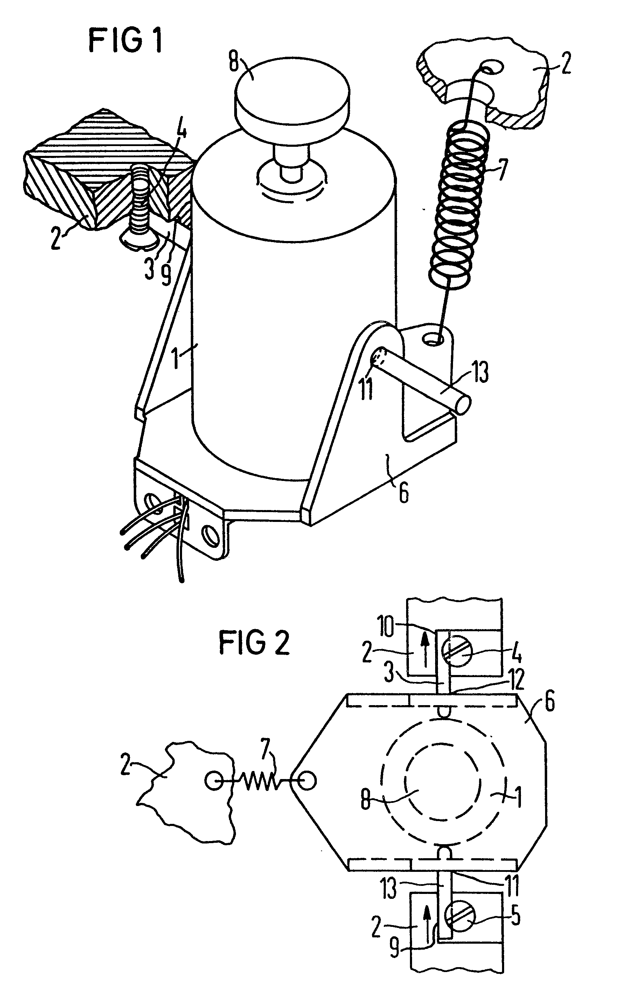

Die spielfreie Justierung des Motors 1 zwischen den Lagerzapfen 3 bzw. 13 geschieht folgendermaßen: Zunächst wird nach einer nur vorläufigen Montage des Ganzen der Lagerzapfen 3 mit Hilfe der Senkschraube 4 in der Innenkante 10 des Gerätehauptrahmens 2 befestigt. Durch die dabei zwischen dem Lagerzapfen 3 und der kegelförmigen Unterseite des Kopfes der Senkschraube 4 vorhandene Reibung wird der Lagerzapfen 3 in Richtung des in Fig. 2 dargestellten Pfeiles bewegt, bis der Lagerzapfen 3 an einem Anschlag im Gerätehauptrahmen 2 anliegt. Durch Weiterdrehen der Schraube 4 wird schließlich der Lagerzapfen 3 sicher in der Innenkante 10 des Gerätehauptrahmens 2 befestigt. Anschließend wird in entsprechender Weise der Lagerzapfen 13 mit Hilfe der Senkschraube 5 in der Innenkante 9 des Geräterahmens 2 festgelegt. Die dabei zwischen dem Lagerzapfen 13 und dem Kopf der Senkschraube 5 vorhandene Reibung bewirkt, daß der Lagerzapfen 13 in Richtung auf den Motor 1 zu bewegt ist, bis sein halbkugelförmiges Ende an dem Motor anstößt. Durch Weiterdrehen der Senkschraube 5 wird dann der Lagerzapfen 13 sicher in der Innenkante 9 des Gerätehauptrahmens 2 festgelegt. Es ist ersichtlich, daß auf diese Weise eine absolut spielfreie Lagerung des Motors 1 erreicht werden kann. Die Erfahrung hat ferner gezeigt, daß durch diese Art der Justierung und Lagerung des Motors 1 zwischen den beiden Lagerzapfen 3 bzw. 13 auch keine zu hohe Reibung zwischen den Enden der Lagerzapfen 3, 13 und dem Motor auftritt.

## Patentanspruch

Aufhängung für den mittels zweier Lagerzapfen (3, 13) schwenkbar gelagerten Bandantriebsmotor (1) in einem Kassettenmagnetbandgerät, bei der die Schwenkachse durch den Schwerpunkt des Motors verläuft und ein Federelement (7) vorgesehen ist, mit dessen Hilfe das auf der Motorachse angeordnete Capstan-Rad (8) mit einer definierten Kraft gegen das Antriebsrad in der Kassette gedrückt wird, gekennzeichnet durch die Anordnung der Lagerzapfen (3, 13), deren dem Motor (1) zugewandte Enden halbkugelförmig ausgebildet sind, in zwei Innenkanten (9, 10) des Gerätehauptrahmens (2), durch zwei neben den Lagerzapfen angeordnete Senkschrauben (4, 5) zum Festklemmen der Lagerzapfen (3, 13) in den Innenkanten (9, 10) des Gerätehauptrahmens (2), durch eine Lagergabel (6) zum Aufnehmen des Motors (1) sowie durch Öffnungen (11, 12) in den freien Enden der Lagergabel (6), durch die die Lagerzapfen (3, 13) ragen und gegen den Motor (1) drücken.

## Claim

A suspension for a swivel-mounted tape drive motor (1) of a magnetic cassette tape recorder, wherein the motor is mounted by two bearing pins (3, 13) and the swivel axis extends through the centre of gravity of the motor and a spring element (7) presses the capstan wheel (8) arranged on the motor axle against the drive wheel in the cassette with a defined force, characterised by the arrangement of the bearing pins (3, 13) having hemispherical ends facing the motor (1) in two inner edges (9, 10) of the main device frame (2), clamped thereto by two counter-sunk screws (4, 5) arranged beside the bearing pins, by a bearing yoke (6) for accommodating the motor (1) and by openings (11, 12) in the free ends of the bearing yoke (6), through which the bearing pins (3, 13) project and press against the motor (1).

## Revendication

Suspension pour le moteur d'entraînement (1) de la bande, montée à articulation au moyen de deux tourillons de montage (3, 13), dans un appareil à cassette à bande magnétique, dans laquelle les axes d'articulation passent par le centre de gravité du moteur, un élément élastique (7) étant prévu, à l'aide duquel la roue du cabestan (8) disposée sur l'arbre du moteur est appliquée avec une force déterminée contre le galet d'entraînement dans la cassette, caractérisé par la disposition des tourillons (3, 13), dont les extrémités qui sont voisines du moteur (1) ont une forme semi-spérique, s'étendent dans deux bords latéraux (9, 10) du cadre principal (2) de l'appareil à travers deux vis (4, 5) à tête noyée, disposées près des tourillons de montage (3, 13) pour bloquer ces derniers dans les bords intérieurs (9, 10) du cadre principal (2) de l'appareil, à travers l'étrier de montage (6) servant à recevoir le moteur (1), de même qu'à travers des ouvertures (11, 12) ménagées dans les extrémités de l'étrier de montage (6) et à travers lesquelles passent les tourillons montage (3, 13), et portent contre le moteur (1).

**FIG 1**

**FIG 2**